# EUROPÄISCHE PATENTSCHRIFT

(11) **EP 0 669 500 B1**
(45) Veröffentlichungstag und Bekanntmachung des Hinweises auf die Patenterteilung: **13.09.2000**
(21) Anmeldenummer: 95810059.6
(22) Anmeldetag: 31.01.1995
(51) Int. Cl.: F23R 3/02, F23R 3/12, F23R 3/54

(54) **Verfahren zur Kühlung einer selbstzündenden Brennkammer**
Procedure for the cooling of a self-ignition combustion chamber
Procédure pour le refroidissement d'une chambre de combustion à auto-ignition

(30) Priorität: 18.02.1994 CH 49694
(43) Veröffentlichungstag der Anmeldung: 30.08.1995
(73) Patentinhaber: ABB ALSTOM POWER (Schweiz) AG, 5401 Baden (CH)
(72) Erfinder: Benz, Urs, CH-5264 Gipf-Oberfrick (CH); Schulte-Werning, Burkhard, Dr., CH-4055 Basel (CH); Walhood, David, CH-5415 Nussbaumen (CH)

(56) Entgegenhaltungen:
- EP-A- 0 161 561
- EP-A- 0 228 091
- EP-A- 0 534 684
- CH-A- 262 073
- US-A- 3 075 352
- US-A- 4 232 527
- US-A- 4 288 980
- US-A- 5 076 061

## Beschreibung

### Technisches Gebiet

Die Erfindung betrifft ein Verfahren zur Kühlung einer selbstzündenden Brennkammer.

### Stand der Technik

Bei den bisher im Gasturbinenbau verwendeten Brennkammern kann zur Kühlung der Brennkammerwände, zwecks Vermeidung zu hoher Materialtemperaturen, fast auf den gesamten Kompressor-Luftmassenstrom zurückgegriffen werden. Nur ein kleiner Bruchteil dieses Luftmassenstromes gelangt in die Brennkammer, ohne vorher zur Kühlung herangezogen worden zu sein. Bei einer solchen Kühlungsart besteht die Optimierung der Kühlung darin, mit einem möglichst kleinen Druckverlust entlang der Kühlstrecke zu arbeiten, damit der Wirkungsgrad der Gasturbinenanlage keinen Einbruch erleidet.

Für eine hohe Komponentenlebensdauer, also eine bestmögliche Kühlung der Komponenten mit einer vorgegebenen Luftmenge vorgegebener Temperatur, ist eine zweckmässige Führung der Verdichterluft vorgängig ihrer Verwendung zur Verbrennung erstrebenswert. So schlägt beispielsweise EP 0 161 561 vor, die Verdichterluft im Gegenstrom um eine Brennkammer zu lenken. Die Luft wird aus dem Verdichter heraus zunächst um die Sekundärzone einer Brennkammer geleitet, welche Brennkammerstruktur in diesem Bereich durch die umströmende Verdichterluft konvektiv gekühlt wird. Die so vorgewärmte Luft wird in der Primärzone der Brennkammer durch Wandöffnungen der Verbrennung zugeführt. Dabei können die Wandöffnungen so beschaffen und angeordnet sein, dass die Verdichterluft vor der Vermischung mit den Verbrennungsgasen eine Effusionskühlung der Brennkammerwand im Bereich der Primärzone der Brennkammer bewerkstelligt.

Bei einer selbstzündenden Brennkammer hingegen, welche vorzugsweise stromab einer ersten Turbine wirkt, lassen sich deren Rauchgase wegen der vorherrschenden hohen Temperatur naturgemäss nicht zu Kühlzwecken heranziehen. Andererseits ist eine solche Brennkammer bereits in der Zuströmzone kalorisch stark belastet, so dass die Kühlung schon dort äusserst effizient sein muss. Dasselbe gilt auch, in vermehrtem Masse, für die anschliessende Verbrennungszone, wo eine noch hohere Wärmebelastung vorherrscht. So gesehen müsste für die Kühlung einer solchen selbstzündenden Brennkammer ein grosser Massenstrom Luft tiefer Temperatur aus dem Prozess entnommen werden. Dabei muss berücksichtigt werden, dass Gasturbogruppen der heutigen Hochleistungsklasse im allgemeinen wenig Luft zu Kühlzwecken freistellen können, da sonst der Wirkungsgrad und die spezifische Leistung markant sinken würden. Von daher sind immer wieder Vorschläge bekanntgeworden, welche eine Kühlung der kalorisch hochbelasteten Aggregate durch andere Medien von aussen postulieren. Im Vordergrunde steht der Vorschlag, die Kühlung durch Dampf zu bewerkstelligen. Ist die Gasturbogruppe in eine Kombianlage mit einen Dampfkreislauf integriert, so sind solche Vorschläge sicher prüfungswert. Wo aber kein Dampf oder sonst kühlungsgeeignete Medien anfallen, kann eine Kühlung der selbstzündenden Brennkammer nur unter Einbussen im Wirkungsgrad erkauft werden.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art eine effiziente Kühlung mit einem minimierten internen Luftmassenstrom vorzuschlagen.

Die wesentlichen Vorteile der Erfindung sind darin zu sehen, dass die Kühlung der Brennkammer mit minimierter Einbusse bezüglich des Wirkungsgrades und der spezifischen Leistung der Gasturbogruppe durchgeführt werden kann. Die Art der Kühlung wird den jeweiligen Verbrennungscharakteristiken innerhalb der Brennkammer angepasst und so durchgeführt, dass der eingesetzte Kühlluftmassenstrom nach beendigter Arbeit in geeigneter Weise Bestandteil der Heissgase ebendieser Brennkammer wird.

Besteht die selbstzündende Brennkammer aus einer Zuströmungszone und einer Verbrennungszone, so wird für jene eine Effusionskühlung, für diese eine Konvektivkühlung gewählt.
Um die angestrebte schadstoffarme Vormischverbrennung in der Verbrennungszone zu gewährleisten, gelangen keine Kühltechniken, die auf kontrollierter Lufteinbringung in diese Zone basieren, beispielsweise Filmkühlung, zur Anwendung.

Die Effusionskühlung besteht darin, in der Brennerwand dicht aneinander gereihte Löcher vorzusehen, durch welche die herangeführte Kühlluft ins Innere der Brennkammer gelangt und so die Brennkammerwand kühlt. An der Brennkammer-Innenseite bildet diese Kühlluft sodann eine dünne thermische Isolationsschicht, welche die Wärmebelastung der Wände verringert und eine grossflächliche Einbringung der Kühlluft in den Hauptmassenstrom mit einem guten Einmischungsgrad gewährleistet. Daneben sorgt diese Effusionskühlung dafür, dass die Flammenfront von der Verbrennungszone nicht stromauf rückschlagen kann, was an sich leicht möglich geschehen kann, da die Strömungsgeschwindigkeit der Verbrennungsluft, insbesondere in den Wandgrenzschichten am Innenliner der Zuströmzone, minimale Werte aufweist und dort ein Rückkriechen der Vormisch-Flamme aus der Verbrennungszone eine potentielle Gefahr darstellt.

Die für die Verbrennungszone zur Anwendung kommende Konvektivkühlung wird vorzugsweise nach dem Gegenstromprinzip ausgelegt, wobei es selbstverständlich auch möglich ist, eine Gleichstromkühlung oder Kombinationen aus den beiden vorzusehen. Charakteristisch für diese Kühlung ist deren Auslegung, wonach auf dem Umfang der äusseren Brennkammerwand, in Längsrichtung der Verbrennungszone, dicht aufeinander folgende Durchströmungsbahnen gebildet werden, deren radiale Tiefe die Kühlkanalhöhe ist, was eine äusserst effiziente Kühlung der thermisch hochbelasteten Brennkammerwand ergibt.

Bei einer Konvektivkühlung der Verbrennungszone im Gegenstromprinzip lässt sich diese Kühlluft strömungsoptimal in einen Vorraum der Zuströmzone überführen, von wo aus die oben beschriebene Effusionskühlung einsetzen kann.

Bei einer derart gekühlten selbstzündenden Brennkammer kann das Verhältnis der benötigten Kühlluft zu dem durch die Brennkammer strömenden Massenstrom bis unter 10% abgesenkt werden, ohne Gefahr zu laufen, dass zu grosse mechanische Belastungen der Brennkammerwände auf Grund des Druckverlustes entlang der zu kühlenden Strecken auftreten.

Vorteilhafte und zweckmässige Weiterbildungen der erfindungsgemässen Aufgabenlösung sind in den weiteren abhängigen Ansprüchen gekennzeichnet.

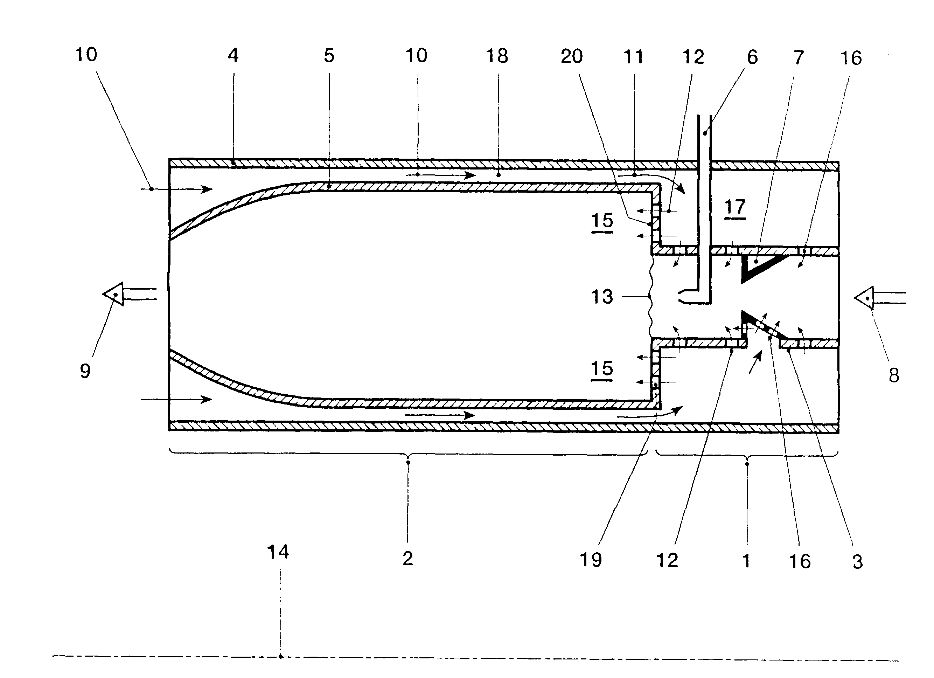

Im folgenden wird anhand der Zeichnung ein Ausführungsbeispiel der Erfindung näher erläutert. Alle für das unmittelbare Verständnis der Erfindung nicht erforderlichen Elemente sind fortgelassen. Die Strömungsrichtung der Medien ist mit Pfeilen angegeben.

### Kurze Beschreibung der Zeichnung

Die einzige Figur zeigt eine gekühlte Brennkammer, welche als Nachbrennkammer einer Gasturbogruppe ausgelegt ist, wobei die Verbrennung auf Selbstzündung beruht.

### Wege zur Ausführung der Erfindung, gewerbliche Verwertbarkeit

Die Figur zeigt eine Brennkammer, welche beispielsweise als zweite Brennkammer einer Gasturbogruppe einsetzbar ist und welche nach einem Selbstzündungsprinzip funktioniert. Diese Brennkammer hat vorzugsweise im wesentlichen die Form eines zusammenhängenden ringförmigen axialen oder quasi-axialen Zylinders, was aus der eingezeichneten Mittelachse 14 hervorgeht, und ist im wesentlichen aus einer Zuströmzone 1 und einer anschliessenden Verbrennungszone 2 zusammengesetzt. Diese Brennkammer kann selbstverständlich auch aus einer Anzahl von axial, quasi-axial oder schraubenförmig angeordneten und in sich abgeschlossenen Brennräumen bestehen. Ist die Brennkammer auf Selbstzündung ausgelegt, so ist die stromauf wirkende und nicht gezeigte Turbine nur auf Teilentspannung der Arbeitsgase 8 ausgelegt, womit diese noch eine recht hohe Temperatur aufweisen. Bei einer solchen Betreibungsart und bei einer ringförmigen Konfiguration der Brennkammer sind in Umfangsrichtung des die Brennkammer bildenden ringförmigen Zylinders mehrere Brennstofflanzen 6 disponiert, welche betreffend Brennstoffzufuhr beispielsweise über eine nicht gezeigte Ringleitung miteinander verbunden sind. Diese Brennkammer weist demnach keine Brenner auf: Der durch die Lanze 6 in die Arbeitsgase 8 eingedüste Brennstoff löst eine Selbstzündung aus, soweit die Arbeitsgase 8 jene spezifische Temperatur aufweisen, welche ebendiese Selbstzündung auszulösen vermag. Wird die Brennkammer mit einem gasförmigen Brennstoff betrieben, so kann für eine Selbstzündung eine Temperatur der Arbeitsgase 8 aus der stromauf gelegenen Turbine um die 1000°C als typischer Wert angesehen werden. Um die Betriebssicherheit und einen hohen Wirkungsgrad bei einer solchen auf Selbstzündung ausgelegten Brennkammer zu gewährleisten, ist es wichtig, dass die Flammenfront 13 während des ganzen Betriebes ortsmässig stabil bleibt. Zu diesem Zweck sind einerseits stromauf der Brennstofflanze 6 innenseitig und in Umfangsrichtung der Innenwand 3 der Zuströmzone 1 eine Reihe von wirbelerzeugenden Elementen 7 vorgesehen, welche im Bereich der Flammenfront 13 eine Rückströmzone induzieren. Andererseits wird in der radialen Ebene zur Flammenfront 13 ein gegenüber dem Querschnitt der Zuströmzone 1 symmetrischer Querschnittssprung 15 vorgesehen, dessen Grösse zugleich den Strömungsquerschnitt der Verbrennungszone 2 bildet. Innerhalb dieses Querschnittssprunges 15 bilden sich während des Betriebes Rückströmzonen, welche wiederum zu einer Ringstabilisation der Flammenfront 13 führen. Da es sich bei einer solchen Brennkammer, aufgrund der axialen Anordnung und der äusserst kurz gehaltenen Baulänge, um eine Hochgeschwindigkeits-Brennkammer handelt, deren mittlere Geschwindigkeit grösser 60 m/s beträgt, müssen die wirbelerzeugenden Elemente 7 strömungskonform ausgebildet sein. Da die kalorische Belastung dieser Brennkammer recht hoch ist, muss die Kühlung äusserst effizient ausfallen. Dabei muss, wie bereits erwähnt, berücksichtigt werden, dass Gasturbogruppen der Hochleistungsstufen im allgemeinen wenig Luft für Kühlzwecke freistellen können, sollen der Wirkungsgrad und die spezifische Leistung nicht markant sinken. Die Kühlung dieser Brennkammer geschieht so, dass zwischen Zuströmzone 1 und Verbrennungszone 2 verschiedene Kühlarten zur Anwendung gelangen. Zunächst wird die Kühlung der Verbrennungszone 2 im Gegenstromprinzip vorgenommen: Eine Kühlluftmenge 10 strömt entlang eines Kühlluftkanals 18, der von der Innenwand 5 und einer Aussenwand 4 der Verbrennungszone 2 gebildet ist, zur Zuströmzone 1 und kühlt konvektiv die kalorisch hochbelastete Innenwand 5 dieser Zone. Die Optimierung der Kühlung im Bereich der Verbrennungszone 2 erfolgt durch entsprechende Anpassung der Höhe des Kühlluftkanals 18, durch eine bestimmte Oberflächenrauhheit der zu kühlenden Innenwand 5, durch verschiedene Berippungen entlang der zu kühlenden Strecke, etc., wobei die bereits erwähnte Möglichkeit, in Umfangsrichtung der Innenwand 5 axiale Durchströmungsbahnen vorzusehen, gute Resultate liefert. Die Konvektivkühlung für die Verbrennungszone 2 kann bisweilen mit einer Prallkühlung ergänzt werden, wobei in diesem Zusammenhang beachtet werden muss, dass der Druck der Kühlluft 10 nicht zu tief absinken darf. Nach getaner erster Kühlung strömt die nun kalorisch teilbelastete Kühlluft 11 in einen Vorraum 17, der sich axial parallel zur Zuströmzone 1 erstreckt und durch Innenwand 3 der Zuströmzone 1 und die bereits gewürdigte Aussenwand 4 gebildet ist. Diese Kühlluft 11 weist indessen immer noch ein grosses Kühlungspotential auf, so dass die Zuströmzone 1, welche gegenüber der Verbrennungszone 2 kalorisch geringer belastet ist, ebenfalls optimal gekühlt werden kann. Für die Zuströmzone 1 wird die Kühlung so vorgenommen, dass ein grosser Teil des genannten Kühlluftstromes 11 über eine grosse Anzahl von Oeffnungen 16 in der Innenwand 3 ins Innere der Zuströmzone 1 strömt. Ein kleiner Teil des Kühlluftstromes 11 strömt über weitere Oeffnungen 19 in der radialen Wand 20 direkt in die Querschnittssprünge 15, wo eine Ringstabilisation vorherrscht, und dient dort nach Bedarf der Kühlung sowie der Stärkung. Die genannten Oeffnungen 16, die in axialer Richtung und in Umfangsrichtung der Zuströmzone 1 verteilt sind, erfassen also integral die ganze Zuströmzone 1 und bewirken, dass die Innenwand 3 mit einem geringen Luftverbrauch gekühlt werden kann. Danebst bildet diese Kühlluft 12 auf der Innenseite der Zuströmzone 1, also entlang dem Innenliner der Wand 3, eine dünne thermische Isolationsschicht aus, welche die Wärmebelastung dieser Wand 3 wesentlich verringert und eine grossflächige Einbringung der zu Kühlzwecken eingesetzten Luft in den Hauptmassenstrom der Arbeitsgase 8 mit guter Einmischung gewährleistet. Durch diese Isolationsschicht wird weiterhin gewährleistet, dass die geforderte Vormisch-Flamme nicht in der Strömungsgrenzschicht an der Wand stromauf bis zum Ort der Brennstoff-Eindüsung wandert, wo sie dann diffusionsartig brennen würde. Dadurch wird das Konzept einer Brennkammer mit selbstzündender, schadstoffarmer Verbrennung wirkungsvoll unterstützt. Weil der überwiegende Teil der anfänglichen Kühlluft 10 stromauf der Flammenfront 13 mit nunmehr einer relativ hohen Temperatur in den Massenstrom der Arbeitsgase eingebracht wird, partizipiert sie im gleichen Masse in der Verbrennungszone 2 an der Aufbereitung zu Heissgasen 9, womit Temperatur-Inhomogenitäten, welche die Selbstzündung, insbesondere im Teillastbetrieb, in Frage stellen könnten, vermieden werden. Der kleine Teil an Kühlluft, der in die Querschnittssprünge 15 eingedüst wird, entfaltet keine Inhomogenitäten, im Gegenteil, diese Kühlluft unterstützt in jenem Bereich die Konvektivkühlung der Verbrennungszone 2, die insbesondere wegen der dort stattfindenden Strömungsablenkung sowie der Querschnittserweiterung zwischen Kühlluftkanal 18 und Zwischenraum 17 besonders geschwächt ist. Bei einer derart gekühlten selbstzündenden Brennkammer kann das Verhältnis der gesamthaft benötigten Kühlluft 10 zum durch die Brennkammer strömenden Massenstrom 8 bis auf unter 10% abgesenkt werden, ohne dass nennenswerte mechanische Belastungen der Innenwände 3 und 5 auf Grund des Druckverlustes im Kühlkanal 18 auftreten können. Um die kalorische Belastung der Wirbelelmente 7 zu mindern, ist es vorteilhaft, wenn diese hohl sind, also eine Fortsetzung der Innenwand 3 der Zuströmzone 1 bilden, wie dies aus der Figur als Variante ersichtlich ist. Die strömungsseitige die Wirbelelmente bildende Abkröpfung ist ebenfall regelmässig mit Oeffnungen 16 versehen, durch welche die Kühlluft 11 ins Innere der Zuströmzone 1 strömt und dort ebenfalls eine Effusions-Kühlwirkung bewirkt. Die Oeffnungen 16 in Wand 3, durch welche die Kühlluft in die Zuströmzone 1 strömt, werden bei bestimmten Strömungsverhältnissen schräg in Strömungs- richtung vorgesehen, damit die bereits genannte Kühlluft-Filmbildung am Innenliner eine stärkere Haftung erfährt. Die Schrägstellung der Oeffnungen 16 richtet sich dabei nach der Stärke der strömungsbedingten Ablösungserscheinung der Kühlluft-Filmbildung.

### Bezeichnungsliste

- 1: Zuströmzone
- 2: Verbrennungszone
- 3: Innenwand der Zuströmzone
- 4: Aussenwand der Verbrennungszone
- 5: Innenwand der Verbrennungszone
- 6: Brennstofflanze
- 7: Wirbelelemente
- 8: Arbeitsgase
- 9: Heissgase
- 10: Kühlluft
- 11: Kühlluft nach Konvektivkühlung
- 12: Kühlluft für Effusionskühlung
- 13: Flammenfront
- 14: Mittelachse
- 15: Querschnittssprung, Ringstabilisation
- 16: Oeffnungen in Wand 3
- 17: Zwischenraum
- 18: Kühlluftkanal entlang der Verbrennungszone
- 19: Oeffnungen in Wand 20
- 20: Radiale Wand

## Patentansprüche

1. Verfahren zur Kühlung einer selbstzündenden Brennkammer einer Gasturbogruppe, welche im wesentlichen aus einer Zuströmzone (1) und einer Verbrennungszone (2) besteht, wobei in die Brennkammer ein Arbeitsgas (8) von hoher Temperatur einströmt, und durch Zumischung eines Brennstoffes (6) eine Selbstzündung des Gemisches ausgelöst wird, wobei die Temperatur des in die Zuströmzone (1) einströmenden Arbeitsgases (8) hinreichend hoch ist, damit durch Zumischung des Brennstoffes (6) eine Selbstzündung des Arbeitsgas/Brennstoff-Gemisches ausgelöst wird, und wobei die Zuströmzone (1) mittels einer Effusionskühlung und die Verbrennungszone (2) mittels einer Konvektivkühlung gekühlt werden.

2. Verfahren nach Anspruch 1, dadurch gekennzeichnet, dass zuerst die Verbrennungszone (2) im Gegenstromprinzip gekühlt wird, und dass dieselbe Kühlluft (10) anschliessend für die Effusionskühlung der Zuströmzone (1) verwendet wird.

3. Verfahren nach Anspruch 1, dadurch gekennzeichnet, dass die Zumischung des Brennstoffes (6) mit den Arbeitsgasen (8) in der Zuströmzone (1) vorgenommen wird, dass am Uebergang zwischen Zuströmzone (1) und Verbrennungszone (2) eine Flammenfront (13) entsteht, dass die Flammenfront (13) durch einen Querschnittssprung (15) der Verbrennungszone 2 gegenüber dem Querschnitt der Zuströmzone (1) stabilisiert wird.

4. Verfahren nach Anspruch 1, dadurch gekennzeichnet, dass in der Zuströmzone (1), stromauf der Eindüsung des Brennstoffes (6), durch eine Anzahl wirbelerzeugender Elemente (7) eine Rückströmzone im Bereich der Flammenfront (13) ausgelöst wird.

5. Verfahren nach Anspruch 4, dadurch gekennzeichnet, dass die wirbelerzeugenden Elemente (7) mittels einer Effusionskühlung gekühlt werden.

## Claims

1. Process for the cooling of an auto-ignition combustion chamber of a gas-turbine set, which consists essentially of an inflow zone (1) and a combustion zone (2), a working gas (8) of high temperature flowing into the combustion chamber and auto-ignition of the mixture being initiated as a result of the admixing of a fuel (6), the temperature of the working gas (8) flowing into the inflow zone (1) being sufficiently high that admixing of the fuel (6) causes auto-ignition of the working gas/fuel mixture to be initiated, and the inflow zone (1) being cooled by means of effusion cooling and the combustion zone (2) being cooled by means of convective cooling.

2. Process according to Claim 1, characterized in that, in the first place, the combustion zone (2) is cooled on the countercurrent principle, and in that the same cooling air (10) is subsequently used for the effusion cooling of the inflow zone (1).

3. Process according to Claim 1, characterized in that the admixing of the fuel (6) with the working gases (8) is carried out in the inflow zone (1), in that a flame front (13) occurs at the transition between the inflow zone (1) and the combustion zone (2), and in that the flame front (13) is stabilized by means of a cross-sectional jump (15) of the combustion zone (2) in relation to the cross section of the inflow zone (1).

4. Process according to Claim 1, characterized in that a backflow zone in the region of the flame front (13) is initiated in the inflow zone (1), upstream of the jetting-in of fuel (6), by means of a number of vortex-generating elements (7) .

5. Process according to Claim 4, characterized in that the vortex-generating elements (7) are cooled by means of effusion cooling.

## Revendications

1. Procédé de refroidissement d'une chambre de combustion à auto-allumage d'un groupe générateur à turbines à gaz, qui se compose essentiellement d'une zone d'admission (1) et d'une zone de combustion (2), dans lequel un gaz de travail (8) à température élevée s'écoule dans la chambre de combustion, et, par addition d'un combustible (6), un auto-allumage du mélange est amorcé, dans lequel la température du gaz de travail (8) s'écoulant dans la zone d'admission (1) est suffisamment élevée pour qu'un auto-allumage du mélange gaz de travail/combustible soit amorcé par l'addition du combustible (6), et dans lequel la zone d'admission (1) est refroidie au moyen d'un refroidissement par effusion et la zone de combustion (2) au moyen d'un refroidissement par convexion.

2. Procédé selon la revendication 1, caractérisé en ce que tout d'abord la zone de combustion (2) est refroidie suivant le principe du contre-courant et en ce que le même air de refroidissement (10) est utilisé ensuite pour le refroidissement par effusion de la zone d'admission (1).

3. Procédé selon la revendicaion 1, caractérisé en ce que l'addition du combustible (6) aux gaz de travail (8) est réalisée dans la zone d'admission (1), en ce qu'il se produit un front de flamme (13) au niveau de la transition entre la zone d'admission (1) et la zone de combustion (2), en ce que le front de flamme (13) est stabilisé par un saut de section transversale (15) de la zone de combustion 2 par rapport à la section transversale de la zone d'admission (1).

4. Procédé selon la revendication 1, caractérisé en ce que dans la zone d'admission (1), en amont de l'injection de combustible (6), une zone de reflux est amorcée dans la région du front de flamme (13) par une pluralité d'éléments (7) générateurs de tourbillons.

5. Procédé selon la revendication 4, caractérisé en ce que les éléments (7) générateurs de tourbillons sont refroidis au moyen d'un refroidissement par effusion.
